# EUROPÄISCHE PATENTANMELDUNG

(11) **EP 1 783 476 A2**
(43) Veröffentlichungstag der Anmeldung: **09.05.2007**
(21) Anmeldenummer: 06119614.3
(22) Anmeldetag: 28.08.2006
(51) Int. Cl.: G01L 17/00, G01L 7/06

(54) **Druckmesser**

(30) Priorität: 04.11.2005 AT 7552005 U
(71) Anmelder: Schuster, Kurt, 4800 Attnang-Puchheim (AT)
(72) Erfinder: Schuster, Kurt, 4800 Attnang-Puchheim (AT)
(74) Vertreter: Staudt, Armin Walter

(57) **Zusammenfassung**

Druckmesser zur exakten Messung des Überdruckes in einem Bereich von wenigen Millibar über Normaldruck, bestehend aus einem runden, bevorzugt zylindrischen Gehäuse (1) mit einer Stirnfläche (2), in welcher sich eine Druckausgleichsöffnung (3) befindet, einem Sichtfenster mit Anzeigeskala, einer innerhalb des Gehäuses (1) angeordneten gummielastischen Einlage (4), welche sich über den Boden (5) eines becherförmigen Einsatzes (6) wölbt, einer Feder (7), die zwischen dem Boden (5) des becherförmigen Einsatzes (6) und einer ringförmigen Abstützfläche (8) an der Stirnfläche (2) sitzt, wobei das becherförmig ausgebildete Gehäuse (1) von einem Verschlussteil (11) mit einem angeformten Aufsteckrohr (12) verschlossen ist, wobei der Verschlussteil (11) und das Aufsteckrohr (12) axial von einer Einlassöffnung (13) für das gasförmige Medium, dessen Überdruck gemessen wird durchsetzt sind, und im Boden des becherförmigen Gehäuses (1) eine Druckausgleichsöffnung (3) angeordnet ist.

## Beschreibung

Die vorliegende Erfindung betrifft einen runden, bevorzugt zylinderförmigen Druckmesser mit einer Membrane, der in einem vorbestimmten Überdruckbereich die exakte Druckmessung von wenigen Millibar ermöglicht. Solche Messbereiche können beispielsweise 0 bis 80 Millibar, 60 bis 120 Millibar oder 100 bis 500 Millibar sein.

Druckmesser, welche im Millibarbereich arbeiten und mittels einer Membrane eine verschiebbare Anzeigeeinrichtung bewegen sind für die Anzeige von Unterdruck bereits bekannt. So beschreibt die DE 1232788 eine Einrichtung zur Überwachung des Verschmutzungsgrades von Luftfiltern für Brennkraftmaschinen mit einer auf den Unterdruck im Ansaugrohr ansprechenden, in ein zylindrisches Gehäuse eingebauten, dieses in zwei Kammern unterteilenden, nachgiebigen Membran, die einerseits über eine Öffnung mit der Atmosphäre und andererseits mit dem Raum, in dem der die Einrichtung steuernde Druck wirkt, in Verbindung steht, wobei auf die den letzteren Raum zugekehrte Seite der Membrane eine Feder wirkt.

Ähnlich aufgebaut ist die aus der US 5,992,239 bekannte Einrichtung zur Messung des Unterdruckes in einem Rohr, welche an einem Rohrdurchbruch fixiert wird. Dieses Rohr ist einerseits mit einer Vakuumquelle und andererseits mit einer Gasquelle verbunden. Innerhalb des zylinderförmigen Gehäuses der Einrichtung wirkt eine an einem Stützring abgestützte Feder mit ihrem freien Ende gegen den Boden eines becherförmigen Einsatzes, der außen von einem flexiblen Diaphragma umfasst ist, deren Rand zwischen der Gehäuseinnenwand und einem zylinderförmigen Einsatz klemmend befestigt ist und den innenliegenden Gasraum von einer zweiten Kammer mit normaler Atmosphäre trennt, wobei der zylinderförmige Einsatz über seine gesamte Seitenfläche vom Gehäuse umfasst ist und in seiner Bodenfläche eine Öffnung zur Umgebungsluft besitzt. Diese Öffnung wird von einem Filter bedeckt, der das Eindringen von Staubpartikel verhindert.

Diese bekannten Einrichtungen sind jedoch nicht für die Anzeige von Überdruck im Millibarbereich geschaffen und eignen sich insbesondere nicht, innerhalb des Anzeigebereiches eine Druckänderung von wenigen Millibar exakt anzuzeigen.

Um hier Abhilfe zu schaffen, stellt sich die vorliegende Erfindung die Aufgabe, einen Druckmesser zu schaffen, der in einem vorgegebenen Druckbereich eine geringfügige Abweichung (von wenigen Millibar) eines Überdruckes gegenüber dem Umgebungsdruck exakt anzeigt, wobei der betreffende Druckbereich durch die Auswahl einer verwendeten Druckfeder und gegebenenfalls einer elastischen Membrane vorgegeben ist.

Diese Aufgabe wird dadurch gelöst, dass ein Druckmesser geschaffen wird, der die technischen Merkmale von Anspruch 1 besitzt. Vorteilhafte Weiterbildungen sind Gegenstand der abhängigen Ansprüche.

Die Erfindung wird nachfolgend anhand der Figuren näher erläutert. Darin zeigt
Fig. 1 einen Axialschnitt durch den erfindungsgemäßen Druckmesser.
Fig. 2 zeigt eine vorteilhafte Weiterbildung des Druckmessers aus Fig. 1, welcher die gesteuerte Änderung des angezeigten Überdruckes im Millibarbereich um wenige Millibar ermöglicht.
Fig. 3 zeigt eine vorteilhafte Weiterentwicklung der Vorrichtung nach Fig. 1.

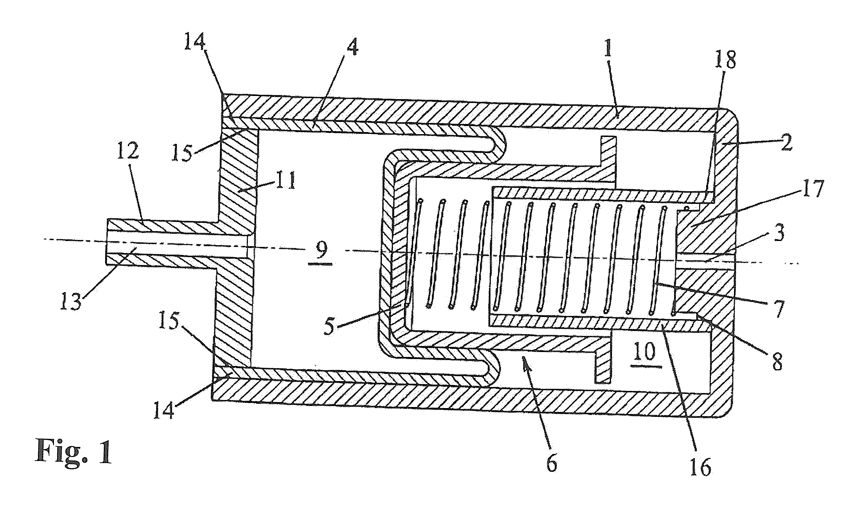

Gemäß Fig. 1 besteht der erfindungsgemäße Druckmesser aus einem runden, bevorzugt zylindrischen Gehäuse 1 mit einer Stirnfläche 2, welche gemeinsam einen einstückigen becherförmigen Bauteil bilden. In der Stirnfläche 2 befindet sich eine Druckausgleichsöffnung 3. Das Gehäuse 1 besitzt ein herkömmliches, hier nicht separat dargestelltes Sichtfenster mit Anzeigeskala, oder besteht selbst aus durchsichtigem Material. Innerhalb des Gehäuses 1 ist eine gummielastische Einlage 4 angeordneten, welche den Gehäuseinnenraum in zwei Kammern 9 und 10 unterteilt. Diese Einlage 4 wölbt sich über den Boden 5 eines becherförmigen Einsatzes 6 innerhalb der Kammer 10. Eine Feder 7, die zwischen dem Boden 5 des becherförmigen Einsatzes 6 und einer ringförmigen Abstützfläche 8 an einem zweistufigen Stützring 17 an der Stirnfläche 2 sitzt, drückt die elastische Einlage 4 gegen den Überdruck in Kammer 9 in Richtung zu einem Verschlussteil 11. An dem Verschlussteil 11 ist ein Aufsteckrohr 12 angeformt, wobei der Verschlussteil 11 und das Aufsteckrohr 12 axial von einer Einlassöffnung 13 für das gasförmige Medium, dessen Überdruck gemessen wird, durchsetzt sind. Der Rand 14 der gummielastischen Einlage 4 ist dabei zwischen der Innenwand des Gehäuses 1 und der Begrenzungsfläche 15 des Verschlussteiles 11 klemmend fixiert.

Sobald der Druckmesser mit dem Aufsteckrohr 12 an eine Vorrichtung mit Überdruck im Millibarbereich abgeschlossen ist, dringt das Druckmedium in die Kammer 9 des Gehäuses 1 ein und schiebt den Boden 5 des becherförmigen Einsatzes 6 gegen den Druck der Feder 7 in Richtung der Stirnfläche 2 des Gehäuses 1. Um die axiale Führung des Einsatzes 6 sicher zu gewährleisten, gleitet der Einsatz 6 entlang einer Führungshülse 16. An der Stirnfläche 2 ist ein in den Innenraum des Gehäuses 1 ragender zweistufiger Stützring 17 angeformt, der vom Endbereich 18 der Führungshülse 16 formschlüssig umfasst wird.

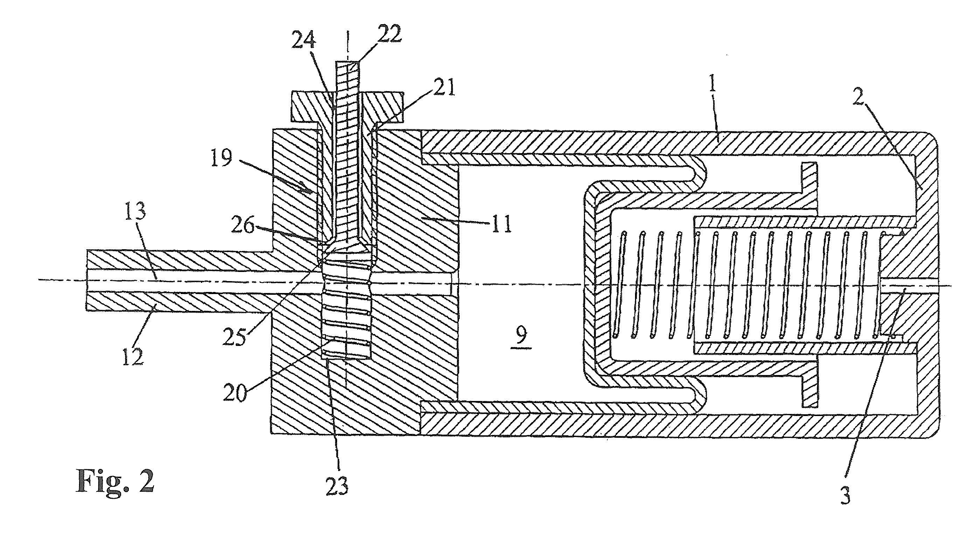

In einer vorteilhaften Weiterbildung, welche in Fig. 2 gezeigt ist, ist innerhalb des Verschlussteiles 11 eine die Einlassöffnung 13 kreuzende Querbohrung 19 angeordnet, in welcher eine Feder 20 liegt, die von einem in einer Hülse 21 gasdicht gelagerten Druckstößel 22 gegen die Innenwand 23 des Verschlussteiles 11 gedrückt wird, um dabei einen Austrittskanal 24 für das unter Überdruck stehende gasförmige Medium freizugeben.

Durch sanften Fingerdruck gegen den Druckstößel 22 wird die Feder 20 zusammengedrückt und der konisch erweiterte Endbereich 25 des Druckstößels 22 hebt sich von der passgenau ausgeformten, konischen Ausnehmung 26 der Hülse 21 ab. Dadurch eröffnet sich der Austrittskanal 24 in den Raum der Querbohrung 19, wodurch das unter Überdruck stehende Gas aus der Einlassöffnung 13 in die Umgebung entweichen kann. Der dadurch hervorgerufene Druckabfall kann an der Skala des Gehäuses 1 abgelesen werden. Sobald der Druck auf einen gewünschten, frei wählbaren Wert abgefallen ist, verhindert ein lösen des Fingerdruckes auf den Druckstößel 22 das weitere entweichen von Gas.

Der erfindungsgemäße Druckmesser eignet sich besonders zur Messung und gegebenenfalls Nachjustierung des Überdruckes in einer luftgefüllten Matratze oder in einem luftgefüllten Kissen, in welchem üblicherweise ein Druck von >o bis etwa 80 Millibar herrscht. Bei Verwendung geeigneter Federn kann er aber auch zur Druckmessung von luftgefüllten, therapeutischen Geräten, etwa Gymnastikbällen eingesetzt werden, welche beispielsweise einen Innendruck von 60 bis 120 Millibar aufweisen. Es ist aber auch denkbar, die Feder und gegebenenfalls die elastische Einlage 4 so auszubilden, dass der erfindungsgemäße Druckmesser beispielsweise für ein Schlauchboot verwendet werden kann, bei welchem der Überdruck zwischen 100 und 500 Millibar liegt. Der Einsatzbereich ist ausdrücklich nicht auf die angeführten Einsatzfälle beschränkt.

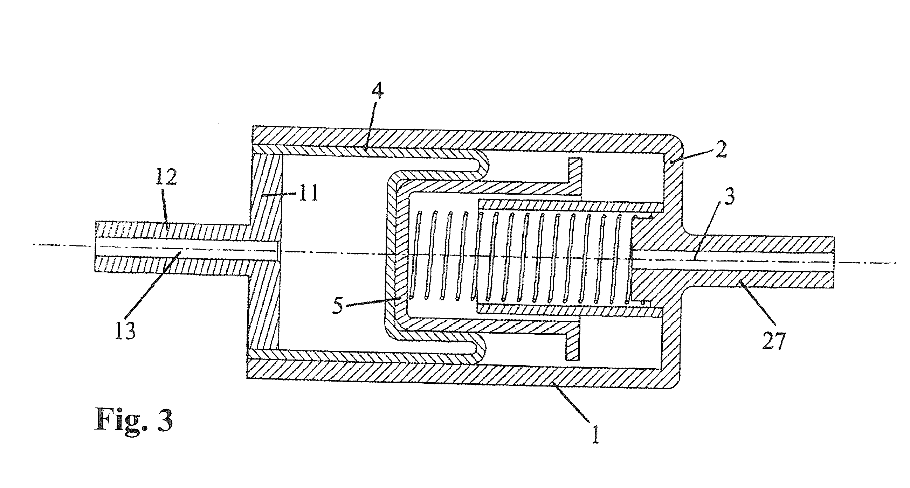

In einer vorteilhaften Weiterführung der Erfindung, welche in Fig. 3 dargestellt ist, ist an die Stirnfläche 2 ein weiteres Aufsteckrohr 27 angeformt, welches von der Druckausgleichsöffnung 3 in Längsrichtung durchsetzt ist. Diese Ausführung des Millibardruckmessers dient zur Messung einer Druckdifferenz im Millibarbereich an beispielsweise einer Filteranlage, wobei das Aufsteckrohr 12 einen Anschluss zur Gaszuführleitung und das Aufsteckrohr 27 einen Anschluss zur Gasabführleitung besitzt. Anhand der exakt angezeigten Druckdifferenz lässt sich dann sehr einfach bestimmen, in welchem Umfang die freie Gasdurchlässigkeit beispielsweise durch Belegung der Filterporen mit Partikeln behindert wird. Auf diese Weise wird es im hier angeführten Beispiel ermöglicht, den optimalen Zeitpunkt zum Wechsel der Filtereinlage zu bestimmen.

## Patentansprüche

1. Druckmesser zur Messung des Überdruckes in einem Bereich von wenigen Millibar über Normaldruck, bestehend aus einem runden, bevorzugt zylindrischen Gehäuse (1) mit einer Stirnfläche (2), in welcher sich eine Druckausgleichsöffnung (3) befindet, einem Sichtfenster mit Anzeigeskala, einer innerhalb des Gehäuses (1) angeordneten gummielastischen Einlage (4), welche sich über den Boden (5) eines becherförmigen Einsatzes (6) wölbt, einer Feder (7), die zwischen dem Boden (5) des becherförmigen Einsatzes (6) und einer ringförmigen Abstützfläche (8) an der Stirnfläche (2) sitzt, wobei das becherförmig ausgebildete Gehäuse (1) von einem Verschlussteil (11) mit einem angeformten Aufsteckrohr (12) verschlossen ist und wobei der Verschlussteil (11) und das Aufsteckrohr (12) axial von einer Einlassöffnung (13) für das gasförmige Medium, dessen Überdruck gemessen wird durchsetzt sind und im Boden des becherförmigen Gehäuses (1) eine Druckausgleichsöffnung (3) angeordnet ist, **dadurch gekennzeichnet, dass** innerhalb des Verschlussteiles (11) eine die Einlassöffnung (13) kreuzende Querbohrung (19) angeordnet ist, in welcher eine Feder (20) liegt, die von einem in einer Hülse (21) gasdicht gelagerten Druckstößel (22) gegen die Innenwand (23) des Verschlussteiles (11) gedrückt wird, um dabei einen Austrittskanal (24) für das unter Überdruck stehende gasförmige Medium freizugeben.

2. Druckmesser nach Anspruch 1, **dadurch gekennzeichnet, dass** an die Stirnfläche 2 ein weiteres Aufsteckrohr 27 angeformt ist, welches von der Druckausgleichsöffnung 3 in Längsrichtung durchsetzt ist.

3. Druckmesser nach Anspruch 1 oder 2, **dadurch gekennzeichnet, dass** er im Millibarbereich, je nach Anwendungsfall in einem Bereich von 0 bis 80 mbar, 60 bis 120 mbar oder 100 bis 500 mbar arbeitet, wobei dieser Bereich lediglich durch die Auswahl der verwendeten Druckfeder und gegebenenfalls der elastischen Membrane bestimmt ist.

4. Druckmesser nach Anspruch 1, 2 oder 3, **dadurch gekennzeichnet, dass** an der Stirnfläche (2) ein in den Innenraum des Gehäuses (1) ragender zweistufiger Stützring (17) angeformt ist, dessen erste Stufe vom Endbereich (18) einer Führungshülse (16) für den becherförmigen Einsatz (6) formschlüssig umfasst ist und dessen zweite Stufe (8) zur Abstützung der Feder (7) dient.

5. Druckmesser nach einem der Ansprüche 1 bis 4, dass der freie Rand (14) der gummielastischen Einlage (4) zwischen der Gehäuseinnenwand und der Außenfläche (15) des Verschlussteiles (11) klemmend fixiert ist.

6. Druckmesser nach einem der Ansprüche 1 bis 5, **dadurch gekennzeichnet, dass** der becherförmige Einsatz (6) und die Hülse (16) aus undurchsichtigem Material gefertigt sind.

7. Druckmesser nach einem der Ansprüche 1 bis 6, **dadurch gekennzeichnet, dass** das Gehäuse (1) vollständig oder entlang einer axial ausgerichteten Fläche aus einem durchsichtigen Material gefertigt ist.

8. Druckmesser nach einem der Ansprüche 1 bis 7, **dadurch gekennzeichnet, dass** die Anzeigeskala farbige Flächen besitzt.

9. Druckmesser nach einem der Ansprüche 1 bis 8, **dadurch gekennzeichnet, dass** die gummielastische Einlage (4) aus einem sehr dünnen Material, beispielsweise aus Latex besteht, welches im Messbereich im wesentlichen keinen Dehnungen unterworfen ist.

10. Druckmesser nach einem der Ansprüche 1 bis 9, **dadurch gekennzeichnet, dass** der becherförmige Einsatz (6) durch die Feder (7) gegen die gummielastische Einlage (4) und den Verschlussteil (11) gedrückt wird und mittels der Hülse (16) in seiner Ausrichtung parallel zum Gehäuse (1) gehalten wird, wobei die Feder (7) sich im gewünschten Druckbereich über eine Strecke von mehreren Zentimetern komprimieren lässt.

11. Druckmesser nach einem der Ansprüche 1 bis 10, **dadurch gekennzeichnet, dass** der Druckstößel (22) innerhalb einer Hülse (21) geführt ist, wobei die Hülse (21) mittels einer Dichtung gasdicht innerhalb der Querbohrung (19) gehalten ist und eine konisch erweiterte Stirnfläche (26) aufweist, und dass der Druckstößel (22) einen konisch erweiterten Endbereich (25) besitzt, welcher passgenau mit der konischen Erweiterung (26) der Hülsenstirnfläche kommuniziert, um einen gasdichten Verschluss zum Austrittskanal (24) darzustellen.
